# EUROPEAN PATENT SPECIFICATION

(11) **EP 3 211 266 B1**
(45) Date of publication and mention of the grant of the patent: **11.12.2019**
(21) Application number: 17153662.6
(22) Date of filing: 30.01.2017
(51) Int. Cl.: F16F 15/22, F16F 15/28, F02B 75/06, F02D 41/00

(54) **AN ENGINE BALANCE ASSEMBLY USING ELECTRIC MOTORS, AND METHOD OF BALANCING VIBRATIONS**
AUSGLEICHSANORDNUNG MITTELS ELEKTRISCHER MOTOREN, UND VERFAHREN ZUM AUSGLEICHEN DER SCHWINGUNGEN
ENSEMBLE D'ÉQUILIBRAGE POUR MOTEUR, UTILISANT DES MOTEURS ELECTRIQUES, ET MÉTHODE D'ÉQUILIBRAGE DES VIBRATIONS

(30) Priority: 18.02.2016 GB 201602826; 18.02.2016 IN 201641005645; 23.11.2016 GB 201619819
(43) Date of publication of application: 30.08.2017
(73) Proprietor: Ford Global Technologies, LLC, Dearborn, MI 48126 (US)
(72) Inventor: GREGORY, Jonathan, Colchester, Essex CO3 9ER (GB); SCOGING, Neill, Chelmsford, Essex CM2 7AT (GB); CAINE, Jonathan Edward, South Woodham Ferrers, Essex CM3 5PT (GB); HAEUSER, Viktor, 51399 Burscheid NRW (DE); ROGERS, Ivan Mark, High Wycombe, Buckinghamshire HP14 4JL (GB)
(74) Representative: Haseltine Lake Kempner LLP

(56) References cited:
- EP-A1- 0 337 040
- DE-A1-102013 210 075
- FR-A1- 2 845 744
- FR-A1- 2 858 034
- FR-A1- 2 904 076
- JP-A- S58 109 744
- JP-A- 2004 218 697
- US-A1- 2008 154 468
- US-A1- 2013 036 996
- US-A1- 2013 312 683

## Description

### Technical Field

The present disclosure relates to a balance assembly for an engine and is particularly, although not exclusively, concerned with a balance assembly configured to operate when the engine is running above a threshold speed.

### Background

Internal combustion engines for vehicles, such as motor vehicles, are available in many different configurations, which may include different numbers and arrangements of cylinders, the cylinders having different ignition timings and/or ignition orders. Some engine configurations may lead to inherent imbalances in the forces exerted on the crank shaft of the engine during engine running. This can lead to reciprocating, rocking, or torsional vibrations of the crank shaft and/or engine.

Depending on the configuration of the engine, the vibrations may be first order, second order or higher order vibrations relative to the rotation of the engine crank shaft. Again, depending on the configuration of the engine, the severity of the vibrations may vary according to the running speed of the engine.

Many engines incorporate one or more balance shafts, comprising out-of-balance weights, which are driven by the engine to balance vibrations. It is often desirable to provide the out-of-balance weights such that they are separated by the greatest possible distance between them. Hence, it may be desirable for the balance shaft to extend substantially the entire length of the engine. Providing a balance shaft, which extends through the engine introduces additional complexity to the construction of the engine, as such balance shafts must be adequately supported, lubricated and driven synchronously with the engine. Additionally, the balance shaft itself many introduce packaging concerns for the engine.

Document US 2013/312683 discloses an internal combustion engine including: an even number of inline cylinders, each accommodating a piston; a crankshaft rotatably mounted about an axis; first and second balance shafts rotatably mounted about balancing axes parallel to and separate from the engine axis; and first and second mechanisms for rotating the first and second balance shafts at rotating speeds that are dependent on a rotating speed of the crankshaft. The second rotating mechanism adjusts a phase difference between angular positions of the first and second balance shafts around the balancing axis.

Document DE 10 2013 210075 discloses a module having a balancer shaft driven by an electric drive and not connected with a crankshaft. The balancer shaft comprises a separator in different regions. A phase position of the regions is adjusted against each other by a mechanical, electrical or hydraulic mechanism. DE 10 2013 210075 A1 shows all the technical features of the preamble of claim 1 and of the method claim 13 and is considered to be the closest prior art.

Document EP 0 337 040 discloses a device for compensating a vibrational force consisting of four rotating masses with parallel axes situated in a same plane. The masses are symmetrical in pairs with respect to a plane perpendicular to the plane and passing through the line of force of the vibrational force to be compensated.

### Statements of Invention

According to an aspect of the present disclosure, there is provided an Internal Combustion Engine (ICE) assembly comprising an ICE and a balance assembly, the balance assembly comprising: a first electric motor coupled to the ICE and configured to rotate a first eccentric mass relative to the ICE, the first eccentric mass being coupled to a shaft of the first electric motor; wherein the first electric motor is configured to rotate the first eccentric mass in order to balance a vibration characteristic of the ICE; a second electric motor coupled to the ICE and configured to rotate a second eccentric mass relative to the ICE, the second eccentric mass being coupled to a shaft of the second electric motor, wherein the first and second electric motors are configured to adjust a difference in phase angle between the first and second electric motor shafts and/or a crank shaft according to a variation in valve timing of the ICE.

The first and second electric motors may each comprise a rotary encoder, configured to determine respective phase angles of the shafts of the first and second electric motors. Additionally or alternatively, the rotary encoders may be configured to allow a difference in phase angle of the first and second electric motor shafts relative to a crank shaft of the ICE to be determined.

The phase angle of the shaft of each of the electric motors may be defined as the angle between a vertical direction and a line extending from a central axis of the shaft to the centre of gravity of the eccentric mass coupled to the shaft. The phase angle of the crank shaft may be defined as the angle between a crank throw, e.g. a first crank throw, of the crank shaft and the vertical direction. The phase angle of each shaft, e.g. the crank shaft and the shafts of the first and second electric motors, may be positive in the direction of rotation of the shaft.

The angle, e.g. phase angle, of the crank shaft may be provided to the balance assembly by a crank position sensor. The ICE assembly may comprise the crank position sensor. At least one of the first and second electric motors may be configured to rotate in an opposite direction to the crank shaft. For example, the first and second electric motors may be configured such that the first and second eccentric masses rotate, relative to a housing of the engine, in a direction opposite to the direction of rotation of the crank shaft, relative to the engine housing. Alternatively, one or more of the eccentric masses may be rotated in the same direction as the crank shaft, relative to the engine housing. Accordingly, the first electric motor may rotate in a direction opposite to the direction of rotation of the second electric motor.

The first and second electric motors may be configured to maintain differences in phase angles between their respective shafts and the crank shaft, the differences in phase angles being substantially equal to predetermined values. Additionally or alternatively, the first electric motor and/or the second electric motor may be configured to maintain a predetermined difference in phase angle between the first and second electric motor shafts. For example, the first electric motor and/or the second electric motor may be configured to maintain a difference in phase angle of substantially 180 degrees between the first and second electric motor shafts.

The first and second electric motors may be configured to rotate at speeds substantially equal to a rotational speed of the crank shaft of the ICE. Alternatively, the first and second electric motors may be configured to rotate at speed substantially equal to twice the rotational speed of the crank shaft of the ICE. Alternatively again, the first and second electric motors may be configured to rotate at speed substantially equal to another multiple or fraction of the rotational speed of the crank shaft of the ICE

The first and second electric motors may be provided on opposite ends, e.g. longitudinal ends, of the engine to each other. (The longitudinal direction of the engine may be defined by the crankshaft of the engine.) The first and second electric motors may be provided, e.g. arranged, such that the first and second electric motor shafts are axially aligned.

The first and/or second electric motors may be coupled to one or more housings of the ICE, such as a cylinder head, a cylinder block and/or a crank case. The first and/or second electric motors may be provided within cavities defined by the one or more housings of the ICE. For example, the first and/or second electric motors may be provided within a crank case, e.g. in the sump. The first and/or second electric motors may be provided within a sealed unit, e.g. to prevent the ingress of oil into the motor. Alternatively, the first and second electric motors may be coupled to an external surface of one or more of the engine housings, e.g. the first and/or second electric motors may be mounted externally to the engine.

The first and second electric motors may be configured to rotate the first and second eccentric masses respectively, when the ICE is operating at or above a threshold running speed. In other words, the first and second electric motors may be configured not to rotate the first and second eccentric masses, when the ICE is operating below a threshold running speed.

The balance assembly may be configured to balance a first order vibration of the engine. Additionally or alternatively, the balance assembly may be configured to balance a second order vibration of the engine. Again additionally or alternatively, the balance assembly may be configured to balance a vibration at a frequency of any other multiple or fraction of the engine running speed.

The balance assembly may further comprise a third electric motor coupled to the ICE and configured to rotate a third eccentric mass relative to the ICE, the third eccentric mass being coupled to a shaft of the third electric motor. The balance assembly may further comprise a fourth electric motor coupled to the ICE and configured to rotate a fourth eccentric mass relative to the ICE, the fourth eccentric mass being coupled to a shaft of the fourth electric motor. The third and fourth electric motors may each be configured to rotate the third and fourth eccentric masses in a direction opposite to the direction of rotation of the first and second electric motors respectively.

The third and fourth electric motors may be provided such that the third and fourth electric motor shafts are axially aligned with each other. The third and fourth electric motors may be offset, e.g. axially offset, from the first and/or second electric motor shafts. For example, the first and second electric motors may be provided above the crank shaft of the engine and the third and fourth electric motors may be provided below the crank shaft. Alternatively, each of the electric motors may be provided above or below the crank shaft, and the first and second electric motors may be laterally offset from the third and fourth electric motors. Alternatively again, each of the electric motors may be axially offset from each of the other electric motors.

The third and fourth electric motors may each comprise a rotary encoder, configured to determine respective phase angles of the shafts of the third and fourth electric motors. The third and fourth electric motors may be configured to rotate at speeds substantially equal to twice a rotational speed of a crank shaft of the ICE.

Any of the features mentioned in relation to the first and second electric motors may apply equally to the third and fourth electric motors.

The internal combustion engine may be a variable displacement engine, e.g. in which one or more cylinders of the engine may be selectively deactivated. Additionally or alternatively, the internal combustion engine may be capable of variable valve timing for one or more of the cylinders.

According to another aspect of the present disclosure, there is provided a method of balancing vibrations of an Internal Combustion Engine (ICE) assembly, the ICE assembly comprising an ICE and a balance assembly, the balance assembly comprising: a first electric motor coupled to the ICE and configured to rotate a first eccentric mass relative to the ICE, the first eccentric mass being coupled to a shaft of the first electric motor. The balance assembly may further comprise a second electric motor coupled to the ICE and configured to rotate a second eccentric mass relative to the ICE, the second eccentric mass being coupled to a shaft of the second electric motor. The method comprises: driving the first and/or second electric motors to rotate the first and/or second eccentric masses to balance a vibration characteristic of the ICE; varying the valve timing of the ICE and/or deactivating or reactivating a cylinder of the ICE; and controlling the operation of the first and/or second electric motor to adjust a difference in phase angle between the first and second electric motor shafts and/or a crank shaft according to the variation in valve timing of the ICE.

The method may further comprise: determining a running speed of the engine. The first and second electric motors may be driven when the engine is running at a speed above a threshold value. Additionally or alternatively, the method may comprise: deactivating the first and/or second electric motor if the engine running speed is below a threshold value.

The ICE may comprise two or more cylinders. The vibration characteristic of the engine may vary according to the number and/or arrangement of activated and/or deactivated cylinders, which may alter the balancing desired from the balance assembly.

The method may further comprise controlling the operation of the first and/or second electric motor to adjust a speed of rotation of the first and/or second eccentric masses.

According to another aspect of the present disclosure, there is provided a vehicle comprising the ICE assembly according to a previously mentioned aspect of the disclosure.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a sectional view of a previously proposed internal combustion engine;
Figure 2 is a perspective view of an engine housing and a balance assembly according to arrangements of the present disclosure;
Figure 3 is a sectional view of an engine housing and a balance assembly according to arrangements of the present disclosure;
Figure 4 is a perspective view of an engine housing and a balance assembly according to arrangements of the present disclosure; and
Figure 5 is a schematic view of an internal combustion engine assembly comprising a balance assembly, according to arrangements of the present disclosure.

### Detailed Description

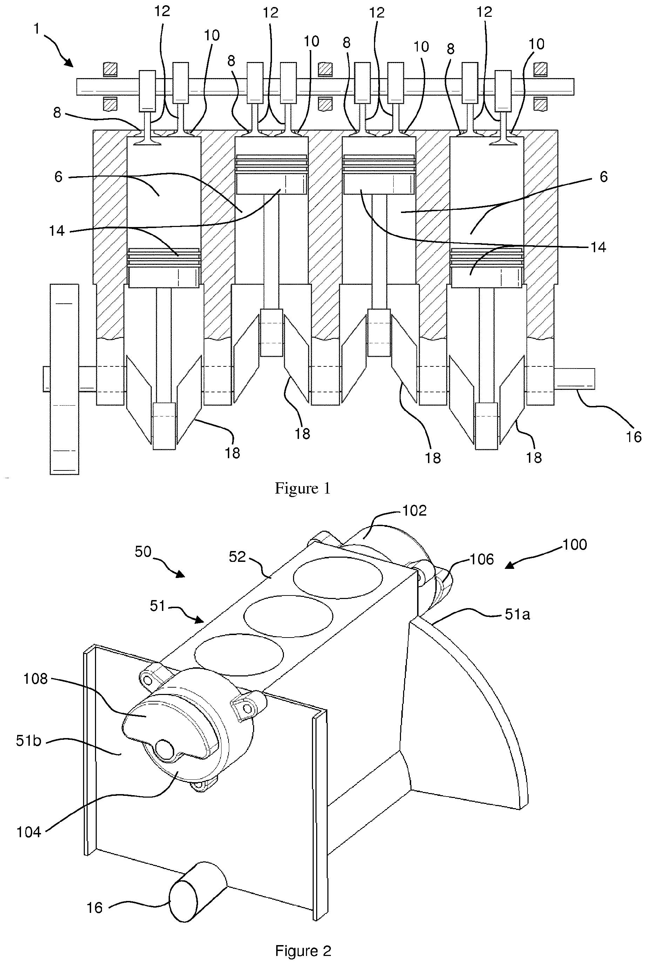

With reference to Figure 1, an engine 1, e.g. for a motor vehicle, may comprise one or more engine housings, such as a cylinder block 2 and a cylinder head 4. The cylinder block 2 may define one or more cylinders 6 and the cylinder head may define an inlet port 8 and an exhaust port 10 for each of the cylinders 6. Valves 12 may be provided at each of the inlet and exhaust ports 8, 10 to control the flow of inlet and exhaust gases into and out of the cylinders 6 respectively.

The engine 1 may further comprise a piston 14 provided within each of the cylinders 6. During operation of the engine, movement of the pistons 14 may act to draw inlet air into the cylinders 6. Fuel may be mixed with the inlet air in each of the cylinders. The mixture of fuel and air may then be compressed by the pistons 14 before being combusted to produce expanding combustion gases. The expanding combustion gases act on the pistons 14 to drive the pistons within the cylinder 6 and turn a crank shaft 16 of the engine. The action of the pistons may then force the combustion gases from the cylinders through the exhaust ports 10.

The pistons 14 may be coupled to the crank shaft 16 via crank throws 18, which extend radially from a central axis of the crank shaft, about which the crank shaft 16 rotates. The crank throws 18 may each extend from the crank shaft 16 in substantially the same radial direction as each other. Alternatively, as depicted in Figure 1, two of the crank throws 18 may be angularly offset from the other crank throws. In alternative arrangements (not shown), each of the crank throws 18 may be angularly offset from each of the others.

Arranging the crank throws 18 to extend from the crank shaft 16 at different angles results in the combustion of fuel and air within the cylinders driving the pistons 14 at different points during the rotation of the crank shaft 16. The angles of the crank throws 18 may be adjusted to alter the timings of the combustion events. Additionally, as shown in Figure 1, although two of the pistons 14 are located at a top dead centre position, due to the timing of the opening and closing of the valves 12, and/or the injection of fuel into the cylinders 6, only one of the cylinders 6 may contain a mixture of inlet air and fuel ready for combustion. The ordering with which the cylinders are fired can therefore be determined by adjusting the timings with which the valves 12 are opened and closed, and/or the fuel is injected.

In addition to the forces caused by the combustion of fuel within the cylinders 6, as the pistons 14 reciprocate, forces are applied to the crank shaft 16 due to the inertias of the pistons 14. The force exerted due to each piston may be out of balance with forces acting on the crank shaft due to the other pistons. The forces may therefore produce vibrations of the crank shaft 16, such as reciprocating, oscillating, rocking and/or torsional vibrations.

The mode and/or magnitude of the vibrations may depend on the number and/or arrangement of the pistons 14 provided in the engine 1. Additionally, the relative timings of the movements of the pistons 14 and/or the order in which the cylinders 6 are fired may affect the vibration induced in the crank shaft 16.

The vibrations induced in the crank shaft 16 may be at substantially the same frequency as the engine running speed, e.g. they may be first order vibrations. Alternatively, the vibrations induced in the crank shaft 16 may be half, twice or three times the frequency of the crank shaft rotation or any other fraction or multiple thereof. The vibrations of the engine 1 may comprise multiple components at different frequencies relative to the engine running speed. The frequency of vibrations may depend on the number and/or arrangement of the cylinders 6, and/or on the relative timings of the movements of the pistons 14 and/or the order in which the cylinders 6 are fired. For example, in the arrangement shown in Figure 1, the movement of the pistons 14 may induce a vibration in the crank shaft at a frequency of twice the rotation speed of the crank shaft, e.g. a second order vibration.

The engine 1 described above with reference to Figure 1 is a previously proposed engine. However, the description of each of the features of the engine 1 may apply equally to the engine provided within the engine assembly 50, according to the present disclosure, described below.

With reference to Figures 2 to 4, in order to balance out vibration of the crank shaft, an engine assembly 50, according to arrangements of the present disclosure, may comprise a balance assembly 100. Although the engine 51 provided within the engine assembly 50 depicted in Figures 2 to 4 comprises three cylinders, it is equally envisaged that the present disclosure could be applied to an engine comprising any number of cylinders, such as three or four cylinders inline. Similarly, although on the engine 51 depicted in Figures 2 to 4, the cylinders 6 are provided inline, e.g. with central axes of each of the cylinders being parallel, it is equally envisaged that the cylinders of the engine may be provided in other arrangements in which the central axes of one or more of the cylinders are angularly offset from one or more of the other cylinders, such as V arrangements or W arrangements. For example, the engine may comprise a V6 or V8 engine or a W16 engine.

The balance assembly 100 may comprise a first electric motor 102 and a second electric motor 104. The electric motors may be configured to rotate first and second eccentric masses 106, 108 coupled to shafts of the first and second electric motors 102, 104 respectively. The first and second electric motors may be configured to rotate the first and second eccentric masses 106, 108 such that a vibration characteristic of the engine 51 is balanced. In some arrangements, the second electric motor may be omitted and the second eccentric mass may also be rotated by the first electric motor. Alternatively, the second eccentric mass may also be omitted or may be combined with the first eccentric mass, e.g. to form a balance shaft comprising two or more eccentric masses.

As shown in Figures 2 to 4, the first electric motor 102 may be provided at a first end 51a of the engine and the second electric motor 104 may be provided at a second end 51b of the engine. The first and second ends 51a, 51b of the engine 51 may be opposite to each other and may be spaced apart in a longitudinal direction of the engine. The electric motors may be coupled to the engine, e.g. directly to one or more housings of the engine. However, it is equally envisaged that one or both of the electric motors 102, 104 may be coupled to a cover of the engine (not shown).

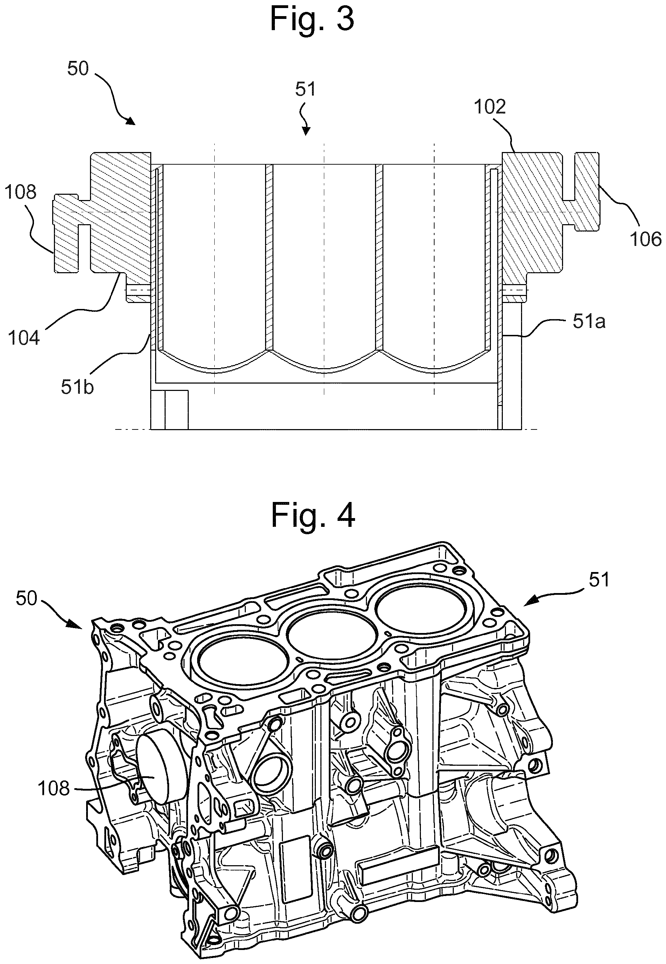

With reference to Figure 4, the electric motors 102, 104 may be provided on the engine such that the eccentric masses 106, 108 are provided within cavities defined by the engine housings and one or more covers of the engine (not shown).

In the arrangement shown in Figures 2 to 4, the first and second electric motors 102, 104 are arranged such that their shafts are substantially aligned, e.g. axially aligned. Additionally, the shafts of the first and second electric motors are substantially parallel to the crank shaft 16. As depicted in Figures 2 to 4, the shafts of the first and second electric motors 102, 104 may be offset from the central axis of the crank shaft 16. However it is equally envisaged that the shafts of the first and second electric motors 102, 104 may be substantially aligned with the central axis of the crank shaft 16 In other arrangements (not shown) the shafts of the first and second electric motors 102, 104 may be offset from each another. For example, the first electric motor 102 may be provided on the engine 51 at a location above the crank shaft 16 and the second electric motor 104 may be provided at a location below the crank shaft 16. In some arrangements, the shafts of the first and/or second electric motors 102, 104 may not be parallel to each other and/or may not be parallel to the crank shaft 16.

In order to ensure vibrations of the engine 51 are suitably balanced, it may be desirable for each of the eccentric masses 106, 108 to be rotated at substantially the same speed as the crank shaft 16 of the engine 51. One or more of the electric motors 102, 104 may be configured to rotate in a direction opposite to the direction of the crank shaft 16. For example, in the arrangement depicted in Figures 2 to 4, the first and/or second electric motors are configured to rotate such that the first and second masses rotate relative to the engine housing 52 in a direction opposite to the direction of rotation of the crank shaft 16 relative to the engine housing 52.

A phase angle may be defined for each of the shafts of the first and second electric motors and the crank shaft of the engine, which defines the angular position of each of the shafts. The phase angle of the shafts of the first and second electric motors 102, 104 may be defined as the angle between a vertical direction and a line extending from a central axis of the shaft to the centre of mass of the eccentric mass coupled to the shaft. For example, in the arrangement depicted in Figure 2, the phase angle of the shaft of the first electric motor 102 is 180 degrees and the phase angle of the shaft of the second electric motor is 0 degrees.

The phase angle of the crank shaft 16 may be defined as the angle between the vertical direction and the angle of one of the crank throws 18, e.g. the first crank throw. For example, in the arrangement depicted in Figure 1, the phase angle of the crank shaft is 180 degrees.

It may be desirable for differences between the phase angles of each of the shafts of the first and second electric motors 102, 104 and the crank shaft 16 to be substantially equal to predetermined values. For example, it may be desirable for the first electric motor 102 to rotate with a phase angle difference of 0 degrees relative to the crank shaft 16 and for the second electric motor 104 to rotate with a phase angle difference of 180 degree relative to the crank shaft 16. Additionally or alternatively, it may be desirable for the difference in the phase angle between the shafts of the first and second electric motors to be substantially equal to a predetermined value, such as 180 degrees.

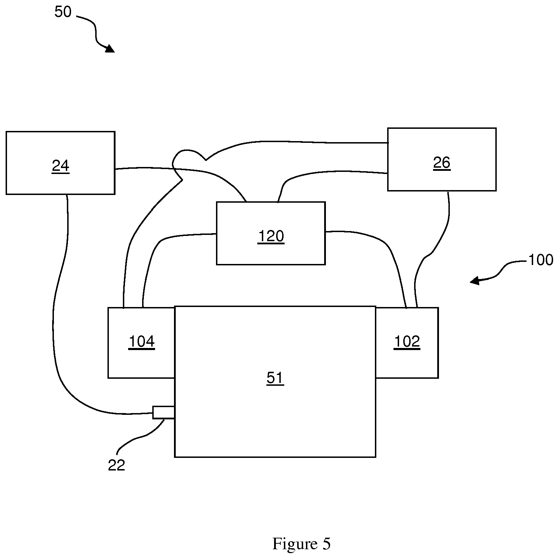

With reference to Figure 5, the engine assembly 50 may comprise a controller 120 configured to control the speed and/or phase angle of the electric motors 102, 104. The controller 120 may be configured to maintain the rotational speed of each shaft of the first and second electric motors 102, 104 and/or the differences in phase angle between each of the shafts and/or the crank shaft 16, such that they are substantially equal to predetermined values. In some arrangements, the first and/or second eccentric masses 106, 108 may be rotated in an opposite direction to the crank shaft 16. In such cases, the phase angle of the first and/or second shaft may be defined in the direction in which they are rotating.

Each of the electric motors 102, 104 may comprise a rotary encoder (not shown), which may be configured to determine an angle of rotation of the shaft of the electric motor 102, 104. The rotary encoders may be incremental or absolute encoders. The rotary encoders may allow the angle of the shaft of each of the electric motors 102, 104 to be determined to an accuracy of 15 degrees or better, e.g. 24 steps for each revolution of the shaft. In another arrangement the rotary encoders may have an accuracy of 1.5 degrees or better, e.g. 240 steps for each revolution of the shaft. The controller 120 may determine a phase angle and/or rotational speed of each of the electric motors 102, 104 by referring to the rotary encoders.

The engine assembly 50 may comprise a crank position sensor 22 configured to determine an angle of the crank shaft 16. The controller 120 may determine the phase angle and/or rotational speed of the crank shaft 16 by referring to signals received from the crank position sensor. In some arrangements, the crank position sensor may be coupled to an ECU 24. The ECU 24 may receive signals from the crank position sensor 22 and may send signals to the controller 120 indicating the phase angle and/or rotational speed of the crank shaft 16.

As described above, the vibration of the engine 51 may vary according to timings of the movements of each of the pistons 14, as well as the timing of the inlet and exhaust valves 12 of each of the cylinders 6, which may affect the timing and/or order in which each of the cylinders 6 is fired. Accordingly, if the timing of the inlet and/or exhaust valves 12 varies, it may be desirable to adjust the difference in phase angle between the shafts of the first and second electric motors 102, 104 and/or the difference in phase angle between each of the shafts and the crank shaft 16. The controller 120 may therefore be configured to determine a variation in the valve timing of the engine 51, for example the controller 120 may receive information from the ECU 24 indicating a variation in the valve timing. The controller 120 may be configured to control the operation of the first electric motor 102 and/or the second electric motor 104 (if provided) to adjust the phase angles of their respective shafts appropriately, in order to continue balancing vibrations of the engine 51.

In order to improve the efficiency of the engine 51 under certain running conditions, one or more cylinders 6 of the engine may be selectively deactivated, e.g. fuel may not be mixed with inlet air within the one or more cylinders 6, and the one or more cylinders 6 may not be fired. For example, one of the cylinders in a three cylinder engine, such as an inline 13 engine, may be selectively deactivated. In other words, the balance assembly of the present disclosure may be applied to a Variable Displacement Engine (VDE). Deactivation of the one or more cylinders 6 may be performed in addition to or separately from adjusting the timing of the inlet and/or exhaust valves 12 of the engine 51. Deactivating one or more cylinders 6 of the engine may affect the vibration of the engine 51, and hence, it may be desirable to adjust the operation of the first and second electric motors 102, 104 in order to continue balancing vibrations of the engine 51. For example, in some arrangements, it may be desirable to adjust the speed of rotation of the first and/or second electric motors 102, 104, e.g. relative to the speed of rotation of the crank shaft 16. In some arrangements, the speed of rotation may be adjusted such that the direction of rotation of the first and/or second electric motors changes, e.g. relative to the direction of rotation of the crank shaft 16. Additionally or alternatively, it may be desirable to adjust a difference in phase angle of the shafts of the electric motors 102, 104 relative to each other and/or relative to the crank shaft 16 of the engine 51.

In a particular arrangement of the present disclosure, the engine comprises a variable displacement engine and the balance assembly comprises the first electric motor 102 configured to rotate one or more eccentric masses at a first speed when the engine is operating with a first displacement. When the displacement of the engine changes, e.g. to a second displacement, the first electric motor is configured to adjust the speed and/or direction or rotation of the eccentric masses, e.g. to a second speed, in order to continue balancing a vibration characteristic of the engine.

If the rotational speed of the first and/or second electric motor 102, 104 is adjusted, such that it is not substantially equal to the engine running speed, the difference in phase angle between the shaft of the first and/or second electric motor 102, 104 and the crank shaft 16, will vary during the rotation of the shaft. In this case, the controller 120 may control the operation of the first and/or second electric motor such that the difference in phase angle is substantially equal to the predetermined value at a predetermined point in the rotation of the crank shaft 16, such as when a first crank throw 18 is substantially aligned with the vertical direction, e.g. the phase angle of the crank shaft 16 is 0 degrees.

For some configurations of engine assembly 50, e.g. according to the number of cylinders 6, the arrangement and/or timing of the pistons 14, cylinders 6 and/or valves 12, the magnitudes of vibrations of the engine 51 may be dependent on the rotational speed of the crank shaft 16. For such configurations of engine 51, it may be desirable to refrain from operating the first and second electric motors 102, 104 when the engine is operating below a predetermined threshold running speed, in order to reduce the power consumption of the balance assembly 100. The controller may therefore by configured to determine the running speed of the engine 51 and may deactivate the first and/or second electric motor 102, 104 if the engine is running below the predetermined threshold running speed.

When the engine running speed increases above the predetermined threshold, the first and/or second electric motors 102, 104 may be activated. The speed of the first and/or second electric motors may be increased to become substantially equal to the engine running speed or any desirable multiple or fraction thereof. The first and/or second electric motors 102, 104 may be controlled to adjust the phase angles of the first and/or second electric motor shafts such that differences in the phase angle between the first and/or second electric motor shafts and the crank shaft 16 are substantially equal to predetermined values. For example, the speed of the first and/or second electric motors may be increased (or decreased) for a period of time, e.g. to become greater than (or less than) the rotational speed of the crank shaft 16, in order to adjust the difference in phase angle between the first and/or second electric motor shafts and the crank shaft 16.

As depicted in Figure 5, the first and second electric motors 102, 104 and/or the controller 120 may be coupled to an electrical system 26 of the vehicle, and may receive power from the electrical system 26 to drive the electric motors 102, 104 and/or operate the controller. However, in alternative arrangements, the balance assembly 100 may comprise a power supply, such as a battery, configured to provide power to the electric motors 102, 104 and/or the controller 120.

It is also envisaged that in some arrangements of the present disclosure, the balance assembly may comprise a single electric motor and associated eccentric mass or masses. Alternatively, the balance assembly may further comprise third and fourth electric motors configured to rotate third and fourth eccentric masses respectively. Providing third and fourth electric motors may allow the balance assembly according to the present disclosure to balance vibrations in engines which otherwise typically comprise a pair of balance shafts to balance vibrations, such as four cylinder engines.

Any of the features mentioned above in relation to the first and second electric motors may apply equally to the third and fourth electric motors. In particular, the third and fourth electric motors may be arranged relative to each other in a similar way to the first and second electric motors, as described above. For example, the third electric motor may be provided at the first end 51a of the engine and the fourth electric motor may be provided at the second end 51b of the engine, or vice versa. The third and fourth electric motors may be arranged such that their shafts are substantially aligned, e.g. axially aligned. The features referring to relative conditions of the first and second electric motors and/or their shafts, such as their phase angles and/or speeds may be equally applicable to the relative conditions of the third and fourth electric motors.

In some arrangements, the third and fourth electric motors may be configured to rotate in the same direction as the first and second electric motors respectively. However, in other arrangements, it may be desirable for the third and fourth electric motors to rotate in the opposite direction relative to the first and second electric motors, e.g. relative to the engine.

When the balance assembly comprises, third and fourth electric motors, it may be desirable for each of the electric motors to rotate at the same speed as the crank shaft 16 of the engine. Alternatively, it may be desirable for the electric motors to rotate at twice the rotational speed of the crank shaft 16.

As described above, it may be desirable to vary the speed and/or phase angle of the electric motors relative to the crank shaft 16 and/or the other electric motors, according to the rotational speed of the crank shaft. Additionally, it may be desirable to deactivate one or more of the electric motors when the engine is running below the predetermined threshold running speed. When the balance assembly comprises the third and/or fourth electric motors, it may be desirable to deactivate the third and/or fourth electric motors when the engine is operating below the same predetermined threshold running speed. Alternatively, it may be desirable to deactivate the third and/or fourth electric motors when the engine is operating below a further predetermined threshold running speed. The further predetermined threshold running speed may be higher or lower that the predetermined threshold.

Additionally, when the engine assembly comprises third and fourth electric motors, it may be desirable to activate or deactivate the third and/or fourth electric motors according to the number of cylinders of the engine that are currently active. For example, if the engine comprises four cylinders, it may be desirable to operate the third and fourth electric motors whilst the engine is operating with all four cylinders active and to deactivate the third and fourth electric motors when one or more cylinders is deactivated. In some arrangements, the third and fourth electric motors may be reactivated when further, e.g. more than one, cylinder is deactivated.

It is also envisaged that it may be desirable to provide more than four electric motors within the balance assembly. Additional electric motors may be provided in pairs and may be arranged relative to each other in the same way as the first and second, and third and fourth electric motors. Alternatively, additional electric motors may be provided individually. The features described above in relation to the first, second, third and fourth electric motors may apply equally to any additional electric motors provided within the balance assembly.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. An Internal Combustion Engine (ICE) assembly (50) comprising an ICE (51) and a balance assembly (100), the balance assembly comprising:
a first electric motor (102) coupled to the ICE and configured to rotate a first eccentric mass (106) relative to the ICE, the first eccentric mass being coupled to a shaft of the first electric motor; and
a second electric motor (104) coupled to the ICE and configured to rotate a second eccentric mass (108) relative to the ICE, the second eccentric mass being coupled to a shaft of the second electric motor;
wherein the first and second electric motors are configured to rotate the first and second eccentric masses in order to balance a vibration characteristic of the ICE, and **characterised in that** the first and second electric motors are configured to adjust a difference in phase angle between the first and second electric motor shafts and/or a crank shaft (16) according to a variation in valve timing of the ICE (51).

2. The ICE assembly (50) according to claim 1, wherein the balance assembly further comprises a controller (120) configured to control the operation of the first and second electric motors (102, 104).

3. The ICE assembly of claim 2, wherein the controller (120) is configured to determine a difference in phase angle of the first and/or second electric motor shafts relative to a crank shaft (16) of the ICE (51).

4. The ICE assembly (50) according to any of claims 1 to 3, wherein the first and second electric motors (102, 104) are configured to maintain differences in phase angles between their respective shafts and a crank shaft (16), the differences in phase angles being substantially equal to predetermined values.

5. The ICE assembly (50) according to any of the preceding claims, wherein the first electric motor (102) and/or the second electric motor (104) is configured to maintain a predetermined difference in phase angle, such as substantially 180 degrees, between the first and second electric motor shafts.

6. The ICE assembly (50) according to any of the preceding claims, wherein the first and second electric motors (102, 104) are configured to rotate at speeds substantially equal to a rotational speed of a crank shaft (16) of the ICE (51) or at speeds substantially equal to twice a rotational speed of a crank shaft of the ICE.

7. The ICE assembly (50) according to any of the preceding claims, wherein the first and second electric motors (102, 104) are provided on opposite longitudinal ends (51a, 51b) of the engine (51) to each other.

8. The ICE assembly (50) according to any of the preceding claims, wherein the first and second electric motors (102, 104) are provided such that the first and second electric motor shafts are axially aligned.

9. The ICE assembly (50) according to any of the preceding claims, wherein the first and/or second electric motors (102, 104) are provided within cavities defined by one or more housings of the ICE.

10. The ICE assembly (50) according to any of the preceding claims, wherein the first and second electric motors (102, 104) are configured to rotate the first and second eccentric masses (106, 108) respectively, when the ICE (51) is operating above a threshold running speed.

11. The ICE assembly (50) according to any of the preceding claims, wherein the balance assembly (100) is configured to balance a first order vibration of the engine (51) and/or to balance a second order vibration of the engine.

12. A vehicle comprising the ICE assembly according to any of the preceding claims.

13. A method of balancing vibrations of an Internal Combustion Engine (ICE) assembly (50), the ICE assembly comprising an ICE (51) and a balance assembly (100), the balance assembly comprising:
a first electric motor (102) coupled to the ICE and configured to rotate a first eccentric mass (106) relative to the ICE, the first eccentric mass being coupled to a shaft of the first electric motor; and
a second electric motor (104) coupled to the ICE and configured to rotate a second eccentric mass (108) relative to the ICE, the second eccentric mass being coupled to a shaft of the second electric motor, the method comprising:
driving the first and second motors to rotate the first and second eccentric masses to balance a vibration characteristic of the ICE; and **characterised by**:
varying the valve timing of the ICE and/or deactivating or reactivating a cylinder of the ICE; and
controlling the operation of the first and/or second electric motor (102, 104) to adjust a difference in phase angle between the first and second electric motor shafts and/or a crank shaft (16) according to the variation in valve timing of the ICE (51).

14. The method according to claim 13, wherein the method further comprises:
determining a running speed of the engine (51);
wherein the first and second electric motors (102, 104) are driven when the engine is running at a speed above a threshold value.

15. The method according to any of claim 13 or 14, wherein the method further comprises:
controlling the operation of the first and/or second electric motor to adjust a speed of rotation of the first and/or second eccentric masses (106, 108).

## Patentansprüche

1. Verbrennungsmotor(ICE)-Anordnung (50), die einen ICE (51) und eine Ausgleichsanordnung (100) umfasst, wobei die Ausgleichsanordnung Folgendes umfasst:
einen ersten Elektromotor (102), der an den ICE gekoppelt und dazu ausgelegt ist, eine erste exzentrische Masse (106) relativ zum ICE zu drehen, wobei die erste exzentrische Masse an eine Welle des ersten Elektromotors gekoppelt ist; und
einen zweiten Elektromotor (104), der an den ICE gekoppelt und dazu ausgelegt ist, eine zweite exzentrische Masse (108) relativ zum ICE zu drehen, wobei die zweite exzentrische Masse an eine Welle des zweiten Elektromotors gekoppelt ist;
wobei der erste und der zweite Elektromotor dazu ausgelegt sind, die erste und die zweite exzentrische Masse zu drehen, um eine Vibrationscharakteristik des ICE auszugleichen, und **dadurch gekennzeichnet, dass** der erste und der zweite Elektromotor dazu ausgelegt sind, eine Phasenwinkeldifferenz zwischen der Welle des ersten und des zweiten Elektromotors und/oder einer Kurbelwelle (16) gemäß einer Variation der Ventilsteuerung des ICE (51) anzupassen.

2. ICE-Anordnung (50) nach Anspruch 1, wobei die Ausgleichsanordnung ferner eine Steuerung (120) umfasst, die dazu ausgelegt ist, den Betrieb des ersten und des zweiten Elektromotors (102, 104) zu steuern.

3. ICE-Anordnung nach Anspruch 2, wobei die Steuerung (120) dazu ausgelegt ist, eine Phasenwinkeldifferenz der Welle des ersten und/oder des zweiten Elektromotors relativ zu einer Kurbelwelle (16) des ICE (51) zu bestimmen.

4. ICE-Anordnung (50) nach einem der Ansprüche 1 bis 3, wobei der erste und der zweite Elektromotor (102, 104) dazu ausgelegt sind, Phasenwinkeldifferenzen zwischen ihrer jeweiligen Welle und einer Kurbelwelle (16) aufrechtzuerhalten, wobei die Phasenwinkeldifferenzen im Wesentlichen mit vorbestimmten Werten übereinstimmen.

5. ICE-Anordnung (50) nach einem der vorhergehenden Ansprüche, wobei der erste Elektromotor (102) und/oder der zweite Elektromotor (104) dazu ausgelegt ist, eine vorbestimmte Phasenwinkeldifferenz, wie etwa im Wesentlichen 180 Grad, zwischen der Welle des ersten und des zweiten Elektromotors aufrechtzuerhalten.

6. ICE-Anordnung (50) nach einem der vorhergehenden Ansprüche, wobei der erste und der zweite Elektromotor (102, 104) dazu ausgelegt sind, mit Geschwindigkeiten zu drehen, die im Wesentlichen mit einer Drehgeschwindigkeit einer Kurbelwelle (16) des ICE (51) übereinstimmen, oder mit Geschwindigkeiten, die im Wesentlichen mit einer doppelten Drehgeschwindigkeit der Kurbelwelle des ICE übereinstimmen.

7. ICE-Anordnung (50) nach einem der vorhergehenden Ansprüche, wobei der erste und der zweite Elektromotor (102, 104) an gegenüberliegenden Längsenden (51a, 51b) des Motors (51) zueinander bereitgestellt sind.

8. ICE-Anordnung (50) nach einem der vorhergehenden Ansprüche, wobei der erste und der zweite Elektromotor (102, 104) derart bereitgestellt sind, dass die Welle des ersten und des zweiten Elektromotors axial ausgerichtet sind.

9. ICE-Anordnung (50) nach einem der vorhergehenden Ansprüche, wobei der erste und/oder der zweite Elektromotor (102, 104) in Hohlräumen, die durch ein oder mehrere Gehäuse des ICE definiert sind, bereitgestellt sind.

10. ICE-Anordnung (50) nach einem der vorhergehenden Ansprüche, wobei der erste und der zweite Elektromotor (102, 104) dazu ausgelegt sind, die erste bzw. die zweite exzentrische Masse (106, 108) zu drehen, wenn der ICE (51) über einer Laufgeschwindigkeitsschwelle betrieben wird.

11. ICE-Anordnung (50) nach einem der vorhergehenden Ansprüche, wobei die Ausgleichsanordnung (100) dazu ausgelegt ist, eine Vibration erster Ordnung des Motors (51) auszugleichen und/oder eine Vibration zweiter Ordnung des Motors auszugleichen.

12. Fahrzeug, das die ICE-Anordnung nach einem der vorhergehenden Ansprüche umfasst.

13. Verfahren zum Ausgleichen von Vibrationen einer Verbrennungsmotor(ICE)-Anordnung (50), wobei die ICE-Anordnung einen ICE (51) und eine Ausgleichsanordnung (100) umfasst, wobei die Ausgleichsanordnung Folgendes umfasst:
einen ersten Elektromotor (102), der an den ICE gekoppelt und dazu ausgelegt ist, eine erste exzentrische Masse (106) relativ zum ICE zu drehen, wobei die erste exzentrische Masse an eine Welle des ersten Elektromotors gekoppelt ist; und
einen zweiten Elektromotor (104), der an den ICE gekoppelt und dazu ausgelegt ist, eine zweite exzentrische Masse (108) relativ zum ICE zu drehen, wobei die zweite exzentrische Masse an eine Welle des zweiten Elektromotors gekoppelt ist, wobei das Verfahren Folgendes umfasst:
Antreiben des ersten und des zweiten Motors, um die erste und die zweite exzentrische Masse zu drehen, um eine Vibrationscharakteristik des ICE auszugleichen; und **gekennzeichnet durch**:
Variieren der Ventilsteuerung des ICE und/oder Deaktivieren oder Reaktivieren eines Zylinders des ICE und
Steuern des Betriebs des ersten und/oder des zweiten Elektromotors (102, 104), um eine Phasenwinkeldifferenz zwischen der Welle des ersten und des zweiten Elektromotors und/oder einer Kurbelwelle (16) gemäß der Variation der Ventilsteuerung des ICE (51) anzupassen.

14. Verfahren nach Anspruch 13, wobei das Verfahren ferner Folgendes umfasst:
Bestimmen einer Laufgeschwindigkeit des Motors (51);
wobei der erste und der zweite Elektromotor (102, 104) angetrieben werden, wenn der Motor mit einer Geschwindigkeit über einem Schwellwert läuft.

15. Verfahren nach einem der Ansprüche 13 oder 14, wobei das Verfahren ferner Folgendes umfasst:
Steuern des Betriebs des ersten und/oder des zweiten Elektromotors, um eine Drehgeschwindigkeit der ersten und/oder der zweiten exzentrischen Masse (106, 108) anzupassen.

## Revendications

1. Un ensemble de moteur à combustion interne (MCI) (50) comprenant un MCI (51) et un ensemble d'équilibrage (100), l'ensemble d'équilibrage comprenant :
un premier moteur électrique (102) couplé au MCI et configuré pour faire tourner une première masse excentrique (106) par rapport au MCI, la première masse excentrique étant couplée à un arbre du premier moteur électrique ; et
un deuxième moteur électrique (104) couplé au MCI et configuré pour faire tourner une deuxième masse excentrique (108) par rapport au MCI, la deuxième masse excentrique étant couplée à un arbre du deuxième moteur électrique ;
dans lequel les premier et deuxième moteurs électriques sont configurés pour faire tourner les première et deuxième masses excentriques afin d'équilibrer une caractéristique de vibration du MCI, et **caractérisé en ce que** les premier et deuxième moteurs électriques sont configurés pour ajuster une différence d'angle de phase entre les premier et deuxième arbres du moteur électrique et / ou un vilebrequin (16) en fonction d'une variation dans le réglage des soupapes du MCI (51).

2. L'ensemble MCI (50) selon la revendication 1, dans lequel l'ensemble d'équilibrage comprend en outre un contrôleur (120) configuré pour contrôler le fonctionnement des premier et deuxième moteurs électriques (102, 104).

3. L'ensemble MCI selon la revendication 2, dans lequel le contrôleur (120) est configuré pour déterminer une différence d'angle de phase des premier et / ou deuxième arbres du moteur électrique par rapport à un vilebrequin (16) du MCI (51).

4. L'ensemble MCI (50) selon l'une quelconque des revendications 1 à 3, dans lequel les premier et deuxième moteurs électriques (102, 104) sont configurés pour maintenir des différences d'angles de phase entre leurs arbres respectifs et un vilebrequin (16), les différences d'angles de phase étant sensiblement égales aux valeurs prédéterminées.

5. L'ensemble MCI (50) selon l'une quelconque des revendications précédentes, dans lequel le premier moteur électrique (102) et / ou le deuxième moteur électrique (104) est configuré pour maintenir une différence prédéterminée d'angle de phase, telle que sensiblement 180 degrés, entre les premier et deuxième arbres du moteur électrique.

6. L'ensemble MCI (50) selon l'une quelconque des revendications précédentes, dans lequel les premier et deuxième moteurs électriques (102, 104) sont configurés pour tourner à des vitesses sensiblement égales à une vitesse de rotation d'un vilebrequin (16) du MCI (51) ou à des vitesses sensiblement égales à deux fois une vitesse de rotation d'un vilebrequin du MCI.

7. L'ensemble MCI (50) selon l'une quelconque des revendications précédentes, dans lequel les premier et deuxième moteurs électriques (102, 104) sont prévus sur des extrémités longitudinales opposées (51a, 51b) du moteur (51) l'une à l'autre.

8. L'ensemble MCI (50) selon l'une quelconque des revendications précédentes, dans lequel les premier et deuxième moteurs électriques (102, 104) sont prévus de telle sorte que les premier et deuxième arbres du moteur électrique sont alignés axialement.

9. L'ensemble MCI (50) selon l'une quelconque des revendications précédentes, dans lequel les premier et /ou deuxième moteurs électriques (102, 104) sont prévus dans des cavités définies par un ou plusieurs boîtiers du MCI.

10. L'ensemble MCI (50) selon l'une quelconque des revendications précédentes, dans lequel les premier et deuxième moteurs électriques (102, 104) sont configurés pour faire tourner les première et deuxième masses excentriques (106, 108) respectivement, lorsque le MCI (51) fonctionne au-dessus d'une vitesse de roulage seuil.

11. L'ensemble MCI (50) selon l'une quelconque des revendications précédentes, dans lequel l'ensemble d'équilibrage (100) est configuré pour équilibrer une vibration du premier ordre du moteur (51) et / ou pour équilibrer une vibration du deuxième ordre du moteur.

12. Un véhicule comprenant l'ensemble MCI selon l'une quelconque des revendications précédentes.

13. Un procédé d'équilibrage des vibrations d'un ensemble de moteur à combustion interne (MCI) (50), l'ensemble MCI comprenant un MCI (51) et un ensemble d'équilibrage (100), l'ensemble d'équilibrage comprenant :
un premier moteur électrique (102) couplé au MCI et configuré pour faire tourner une première masse excentrique (106) par rapport au MCI, la première masse excentrique étant couplée à un arbre du premier moteur électrique ; et
un deuxième moteur électrique (104) couplé au MCI et configuré pour faire tourner une deuxième masse excentrique (108) par rapport au MCI, la deuxième masse excentrique étant couplée à un arbre du deuxième moteur électrique, le procédé comprenant :
l'entraînement des premier et deuxième moteurs pour faire tourner les première et deuxième masses excentriques afin d'équilibrer une caractéristique de vibration du MCI ; et **caractérisé par** :
la variation du réglage des soupapes du MCI et / ou la désactivation ou la réactivation d'un cylindre du MCI ; et
le contrôle du fonctionnement du premier et / ou du deuxième moteur électrique (102, 104) pour ajuster une différence d'angle de phase entre les premier et deuxième arbres du moteur électrique et / ou un vilebrequin (16) en fonction de la variation dans le réglage des soupapes du MCI (51).

14. Le procédé selon la revendication 13, dans lequel le procédé comprend en outre :
la détermination d'une vitesse de roulage du moteur (51) ;
dans lequel les premier et deuxième moteurs électriques (102, 104) sont entraînés lorsque le moteur tourne à une vitesse supérieure à une valeur seuil.

15. Le procédé selon l'une quelconque des revendications 13 ou 14, dans lequel le procédé comprend en outre :
le contrôle du fonctionnement du premier et / ou deuxième moteur électrique pour ajuster une vitesse de rotation des première et / ou deuxième masses excentriques (106, 108).
